# EUROPÄISCHE PATENTANMELDUNG

(11) **EP 2 977 260 A2**
(43) Veröffentlichungstag der Anmeldung: **27.01.2016**
(21) Anmeldenummer: 15002158.2
(22) Anmeldetag: 21.07.2015
(51) Int. Cl.: B60P 1/44

(54) **HUBLADEBÜHNE**

(30) Priorität: 24.07.2014 DE 102014010838
(71) Anmelder: MBB Palfinger GmbH, 27777 Ganderkesee (DE)
(72) Erfinder: Rulfs, Eike, 27804 Berne (DE); Deobald, Alexander, 27798 Hude (DE)
(74) Vertreter: Möller, Friedrich

(57) **Zusammenfassung**

Bei Hubladebühnen ist es erforderlich, bei auf dem Boden abgesenkter Ladeplattform eine sogenannte Bodenangleichung durchzuführen, damit die hintere freie Spitze der keilförmige Ladeplattform zum Be- und Entladen auf dem Boden anliegt. Die Bodenangleichung erfolgt bisher mechanisch oder durch eine elektrische Steuerung. Die Realisierung der Mechanik bzw. Steuerung erfordert einen hohen Aufwand.

Die Erfindung sieht es vor, mindestens einem Hubzylinder (18) der Hubladebühne einen Innenkolben (24) zuzuordnen, der nach Art eines Druckübersetzers ausgebildet ist. Wird der Hubzylinder (18) mit Hydrauliköl zum Anheben versorgt, wird hierdurch anfänglich noch nicht der Kolben (23) des Hubzylinders (18) ausgefahren, sondern erst der Innenkolben (24) in den Kolben (23) eingefahren. Das dadurch verdrängte Hydrauliköl wird zum mindestens einen Kippzylinder (17) geleitet, wo es zu einer automatischen Rückgängigmachung der Bodenangleichung durch ein entsprechendes anfängliches Hochschwenken der Ladeplattform führt.

## Beschreibung

Die Erfindung betrifft eine Hubladebühne gemäß dem Oberbegriff des Anspruchs 1.

Hubladebühnen dienen dazu, das Be- und Entladen von Fahrzeugen mit insbesondere schweren Gegenständen zu erleichtern. Dazu verfügen die Hubladebühnen über eine vorzugsweise an der Rückseite des Fahrzeugaufbaus schwenk-, heb- und senkbar angelenkte Ladeplattform. Zum Heben, Senken und Schwenken der Ladeplattform ist ihr ein Hubwerk mit mindestens einem Hubzylinder und mindestens einem Kippzylinder zugeordnet.

Zum Be- und Entladen wird die in einer Ruhestellung hinter dem Fahrzeugaufbau hochgeschwenkte Ladeplattform heruntergeschwenkt in eine horizontale oder nahezu horizontale Schwenkposition. Durch Absenken der abgeklappten Ladeplattform können die zu entladenden Gegenstände vom Niveau der Ladefläche des Fahrzeugaufbaus auf ein niedriges Niveau, insbesondere ein Bodenniveau, gebracht werden. Umgekehrt wird die Ladeplattform zum Beladen des Fahrzeugs angehoben.

Die Ladeplattform ist von der Seite gesehen keilförmig ausgebildet mit einer in Fahrtrichtung des Fahrzeugs gesehen hinteren Spitze. Die Spitze ist gebildet durch eine freie, hintere Querkante der Ladeplattform. Infolge der Keilform muss die Ladeplattform nach dem Absenken auf den Boden erneut verschwenkt werden, damit ihre Spitze im Wesentlichen übergangslos am Boden anliegt. Im Fachjargon spricht man hierbei von einer Bodenangleichung. Vor dem erneuten Anheben der Ladeplattform muss die Bodenangleichung wieder rückgängig gemacht werden durch ein Zurückschwenken, damit die Spitze vom Boden angehoben wird und die obere Nutzfläche der Ladeplattform wieder eine horizontale oder nahezu horizontale Schwenkposition einnimmt, in der keine Gegenstände von der Ladeplattform herunterrutschen können. Die Rückgängigmachung der Bodenangleichung erfordert vom Bediener viel Geschick sowie Erfahrung und außerdem mindestens einen zusätzlichen Bedienbefehl.

Es sind Hubladebühnen bekannt, bei denen die Bodenangleichung durch eine elektrische bzw. elektronische Steuerung oder eine Mechanik automatisch rückgängig gemacht wird. Solche Steuerungen und Mechaniken sind aufwendig und störanfällig.

Ausgehend vom Vorstehenden liegt der Erfindung die Aufgabe zugrunde, eine Hubladebühne zu schaffen, die auf einfache Weise die Bodenangleichung zuverlässig automatisch wieder rückgängig macht.

Eine Hubladebühne zur Lösung dieser Aufgabe weist die Merkmale des Anspruchs 1 auf. Dadurch, dass im Kolben des mindestens einen Hubzylinders ein kleinerer Innenkolben angeordnet ist, findet bei einer Beaufschlagung des Hubzylinders mit Hydraulikflüssigkeit zuerst eine Bewegung des Innenkolbens statt. Dadurch wird zunächst vom mindestens einen Kippzylinder die Bodenangleichung automatisch hydraulisch rückgängig gemacht, bevor der mindestens eine Hubzylinder die Ladeplattform anhebt.

Bevorzugt ist der mindestens eine Hubzylinder einfach wirkend ausgebildet. Dadurch lässt sich im Kolben der kleinere Innenkolben anordnen, der beim selbsttätigen schwerkraftbedingten Einfahren des mindestens einen Hubzylinders zum Absenken der Ladeplattform unbetätigt bleibt. Bevorzugt kann es vorgesehen sein, den Innenkolben einem im Hubzylinder liegenden Ende seines Kolbens zuzuordnen. Der Innenkolben wird dadurch vor dem Ausfahren des Hubzylinders zum Anheben der Ladeplattform mit Hydrauliköl versorgt bzw. beaufschlagt. Es ist zum Betätigen des Innenkolbens kein zusätzlicher Hydraulikanschluss erforderlich.

Eine vorteilhafte Ausgestaltungsmöglichkeit der Hubladebühne sieht es vor, dass der Innenkolben relativ zum Kolben des mindestens einen Hubzylinders insbesondere teleskopartig verschieblich ist. Vorzugsweise ist der Innenkolben in den Kolben des Hubzylinders einfahrbar und aus dem Kolben des Hubzylinders ausfahrbar. Der Innenkolben ist somit quasi teleskopisch im Kolben mindestens eines Hubzylinders gelagert, so dass zumindest zum Anheben der Ladeplattform zuerst der Innenkolben und erst anschließend der eigentliche Kolben sich bewegt und dabei die Ladeplattform anhebt. Bevorzugt wird zuerst der Innenkolben in den Kolben des Hubzylinders eingefahren, bevor der Kolben des Hubzylinders ausgefahren wird. Diese gezielte Bewegungsabfolge lässt eine besonders einfache und zuverlässige automatische hydraulische Rückgängigmachung der Bodenangleichung zu.

Eine andere Ausgestaltungsmöglichkeit der Hubladebühne sieht es vor, dass der Kolben eine von seinem Ende im Inneren des Hubzylinders ausgehende, innere Zylinderbohrung aufweist, die dazu dient, den Innenkolben mindestens teilweise aufzunehmen. Durch die Zylinderbohrung im Kolben des Hubzylinders bildet der Kolben des Hubzylinders einen Zylinder für den Innenkolben. Der Innenkolben ist in diesem Zylinder wahlweise einfahrbar, wobei er Hydrauliköl verdrängt oder aus dem Kolben herausfahrbar durch in die Zylinderbohrung einströmendes, insbesondere hineingedrücktes, Hydrauliköl.

Bei einer vorteilhaften Ausgestaltungsmöglichkeit der Erfindung ist es vorgesehen, dass bei zur Bodenangleichung ausgefahrenem Innenkolben eine wirksame Innenkolbenfläche desselben größer ist als eine wirksame Kolbenfläche des Kolbens des Hubzylinders. Das führt dazu, dass bei allen denkbaren Beladungszuständen der Ladeplattform, auch bei einer ungleichförmigen Beladung, beispielsweise nur des Bereichs der Spitze der Ladeplattform, zuerst der Innenkolben in den Kolben des Hubzylinders zur selbsttätigen Rückgängigmachung der Bodenangleichung eingefahren wird, bevor der Kolben des Hubzylinders zum Heben der Ladeplattform ausgefahren wird. Erst wenn der Innenkolben vollständig in den Kolben des Hubzylinders eingefahren ist, addiert sich die Kolbenfläche des Innenkolbens zur Kolbenfläche des Kolbens des Hubzylinders, wodurch nach der Bodenangleichung die volle Hubkraft zum Anheben auch einer maximal belasteten Ladeplattform erzeugbar ist.

Bevorzugt kann es vorgesehen sein, während der Bewegbarkeit des Innenkolbens im Kolben des Hubzylinders die wirksame Kolbenfläche des Kolbens durch eine Ringfläche zwischen dem größten Außendurchmesser des Kolbens und der wirksamen Kolbenfläche des Innenkolbens zu bilden. Dabei ist diese Ringfläche kleiner als die wirksame Kolbenfläche des Innenkolbens. Dadurch ist sichergestellt, dass während der Bewegbarkeit des Innenkolbens relativ zum Kolben unter allen Umständen nur der Innenkolben bewegt wird, aber nicht der Kolben. Erst bei vollständig eingefahrenem Innenkolben, wenn nämlich eine Relativbewegung zwischen dem Innenkolben und dem Kolben nicht mehr möglich ist, setzt sich die wirksame Kolbenfläche des Kolbens aus der Ringfläche und der Kolbenfläche des Innenkolbens zusammen, so dass erst dann der mindestens eine Hubzylinder die Ladeplattform anheben kann.

Eine vorteilhafte Möglichkeit der Ausgestaltung der Hubladebühne sieht es vor, die Zylinderbohrung im Kolben mindestens eines Hubzylinders hydraulisch mit mindestens einem Kippzylinder zu verbinden. Auf diese Weise kann vom in den Kolben einfahrenden Innenkolben verdrängte Hydraulikflüssigkeit genutzt werden, um den mindestens einen Kippzylinder etwas auszufahren und dabei die Spitze der Ladeplattform zuerst so weit hochzuschwenken, dass die Bodenangleichung rückgängig gemacht ist. Dazu sind der Zylinderraum bzw. die Zylinderbohrung für den Innenkolben im Kolben des Hubzylinders und der Hubweg des Innenkolbens so bemessen, dass das beim Einfahren des Innenkolbens in den Kolben des Hubzylinders verdrängte Hydrauliköl den mindestens einen Kippzylinder nur so weit hochschwenkt, dass dadurch die Bodenangleichung rückgängig gemacht wird.

Durch eine bevorzugte Ausgestaltung des Innenkolbens als Druckübersetzer wird erreicht, dass bei Betätigung des mindestens einen den Innenkolben aufweisenden Hubzylinders in die Ladeplatfform hebenden Sinne immer erst der Innenkolben mindestens teilweise in den Kolben des Hubzylinders eingefahren wird und dabei der Druck im Kippzylinder stets ausreicht zur Rückgängigmachung der Bodenangleichung, bevor von mindestens einem Hubzylinder die Ladeplattform angehoben wird.

Bevorzugt ist die Hubladebühne so ausgebildet bzw. so weitergebildet, dass die Zylinderbohrung im Kolben des mindestens einen Hubzylinder hydraulisch mit einer Kolbenseite des mindestens einen Kippzylinders verbunden ist. Dadurch kann ohne ein direktes Betätigen des mindestens einen Kippzylinders allein durch ein Betätigen des Hubzylinders im die Ladeplattform hebenden Sinne ein teilweises Ausfahren des Kippzylinders so weit erfolgen, dass dadurch die Bodenangleichung rückgängig gemacht wird, bevor der Hubzylinder die Ladeplattform anhebt.

Es ist möglich, der hydraulischen Verbindungsleitung zwischen der Zylinderbohrung des Hubzylinders und der Kolbenseite des Kippzylinders ein schaltbares Rückschlagventil, vorzugsweise ein freigebbares bzw. entsperrbares Rückschlagventil, zuzuordnen. Das Rückschlagventil lässt einen Zufluss von Hydrauliköl vom Hubzylinder zum Kippzylinder nur zur Rückgängigmachung der Bodenangleichung zu. Wenn bei angehobener Ladeplattform diese durch Ausfahren des Kippzylinders weiter hochgeschwenkt werden soll, sperrt das Rückschlagventil den Rückfluss von Hydraulikflüssigkeit zum Hubzylinder. Durch die Umschaltbarkeit bzw. Entsperrbarkeit kann bei Bedarf das Rückschlagventil freigegeben werden, um beim Einfahren des Kippzylinders den Innenzylinder im Hubzylinder wieder in seine Ausgangsstellung zu bringen, nämlich aus der in den Kolben eingefahrenen Position in die maximal ausgefahrene Position zu überführen, wodurch nach erfolgter Bodenangleichung der Ladeplattform diese Bodenangleichung wieder rückgängig gemacht werden kann.

Ein bevorzugtes Ausführungsbeispiel der Erfindung wird nachfolgend anhand der Zeichnung näher erläutert. In dieser zeigen:
- Fig. 1: eine Seitenansicht eines hinteren Teils eines Fahrzeugs mit einer Hubladebühne in einer in eine Ruheposition hochgeschwenkten Ladeplattform,
- Fig. 2: einen mittigen Längsschnitt durch einen eingefahrenen Hubzylinder der Hubladebühne mit einem sich in einer ausgefahrenen Ausgangsstellung befindlichen Innenkolben,
- Fig. 3: den noch eingefahrenen Hubzylinder in einer Darstellung analog zur Fig. 2 mit vollständig eingefahrenem Innenkolben,
- Fig. 4: einen Schnitt durch den Hubzylinder gemäß den Fig. 2 und 3 mit vollständig eingefahrenem Innenkolben und vollständig aus dem Hubzylinder ausgefahrenem Kolben, und
- Fig. 5: ein Hydraulikschaltbild zum Betätigen des Hubzylinders und eines Kippzylinders.

Die Figuren zeigen eine an der Rückseite eines Aufbaus eines nur teilweise dargestellten Fahrzeugs 10 montierte Hubladebühne 11. Die Hubladebühne 11 verfügt über eine Ladeplattform 12 mit einer ebenen Nutzfläche 13 und einem Hubwerk 14. Das Hubwerk 14 ist mit einer starren Traverse 15, einem sogenannten Tragrohr, am Rahmen des Fahrzeugs 10 befestigt. Das Hubwerk 14 ist nach dem Parallelogrammprinzip aufgebaut, besteht nämlich im gezeigten Ausführungsbeispiel aus zwei auf gegenüberliegenden Seiten des Hubwerks 14 angeordneten Lenkerarmen 16. Der Kippzylinder 17 und der Hubzylinder 18 sind als Hydraulikzylinder ausgebildet. Der Kippzylinder 17 ist doppelt wirkend und dient dazu, die Ladeplattform 12 in entgegengesetzten Richtungen hoch-oder herunterzuschwenken. Demgegenüber dient der Hubzylinder 18 dazu, die Ladeplattform 12 anzuheben und abzusenken. Der Hubzylinder 18 ist nur einfach wirkend ausgebildet, weil das Absenken schwerkraftbedingt erfolgen kann. Die Erfindung eignet sich auch für Hubladebühnen 11, die über zwei parallele Kippzylinder 17 und zwei parallele Hubzylinder 18 verfügen. Die Erfindung ist also nicht auf das hier gezeigte Ausführungsbeispiel der Hubladebühne 11 mit einem einzigen Kippzylinder 17 und einem einzigen Hubzylinder 18 beschränkt.

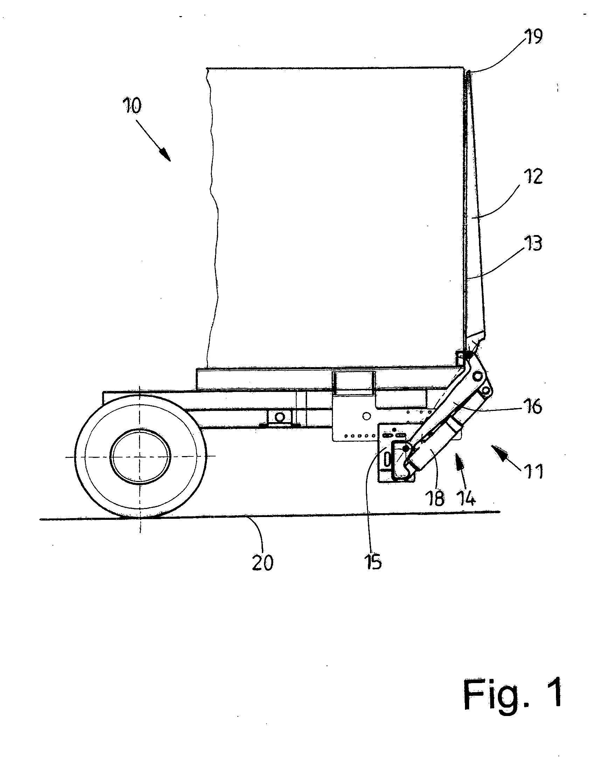

Die Ladeplattform 12 weist in einer in der Fig. 1 dargestellten Seitenansicht eine keilförmige Gestalt auf. Die Ladeplattform 12 verjüngt sich demgemäß zu einer freien, quer zur Fahrtrichtung des Fahrzeugs 10 verlaufenden Querkante. Diese Querkante bildet an dem in Fahrtrichtung gesehen hinteren Ende der Ladeplattform eine Spitze 19.

Aufgrund der Spitze 19 am freien hinteren Ende der Ladeplattform 12 ist es möglich, die auf den Boden 20 abgesenkte Ladeplattform 12 im Wesentlichen übergangslos zu beund entladen.

Das keilförmige Profil der Ladeplattform 12 macht es erforderlich, die Ladeplattform 12 nach dem Absenken auf den Boden 20 mittels des Kippzylinders 17 zu verschwenken, damit die Spitze 19 den Boden 20 berührt. Im Fachjargon spricht man hierbei von einer "Bodenangleichung". Bei der Bodenangleichung verläuft die ebene Nutzfläche 13 auf der Oberseite der Ladeplattform 12 leicht schräg abwärts zur Spitze 19. Diese durch die Bodenangleichung entstehende Schrägstellung der Nutzfläche 13 der Ladeplattform 12 muss vor dem Anheben derselben wieder rückgängig gemacht werden, damit nicht die Gefahr besteht, dass ein sich auf der Ladeplattform 12 befindender Gegenstand von der schrägen Nutzfläche 13 abrutscht. Mindestens die Rückgängigmachung der Bodenangleichung, vorzugsweise auch die Bodenangleichung selbst, erfolgen erfindungsgemäß automatisch hydraulisch durch eine besondere Ausgestaltung des Hubzylinders 18 und einer Verbindungsleitung 21 vom Hubzylinder 18 zum doppelt wirkenden Kippzylinder 17.

Der einfach wirkende Hubzylinder 18 verfügt in an sich bekannterweise über einen Zylinder 22 mit einem darin hin- und herbewegbaren Kolben 23, wobei erfindungsgemäß im Inneren des Hubzylinders 18 ein Innenkolben 24 vorgesehen ist. Der Innenkolben 24 ist relativ zum Zylinder 22 und Kolben 23 axialverschieblich.

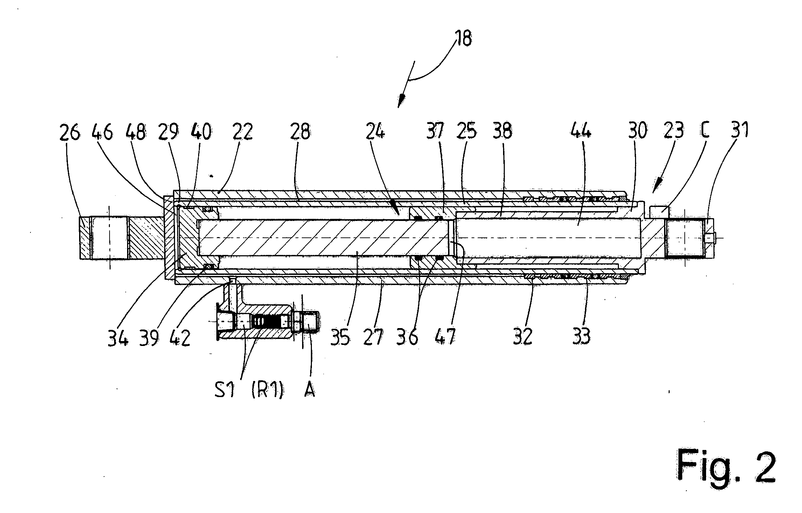

Der Kolben 23 des Hubzylinders 18 verfügt über ein Zylinderrohr 25, dass im Zylinder 22 axialverschieblich ist. Der Zylinder 22 ist an einem (in den Fig. 2 bis 4 linken) Ende durch einen Boden verschlossen. Dieser Boden ist mit einem Befestigungsmittel 26 zur gelenkigen Anhängung des Hubzylinders 18 am Tragrohr oder am Fahrgestellrahmen des Fahrzeugs 10 versehen. Das gegenüberliegende (rechte) Ende des Zylinders 22 ist vollständig offen. Der Zylinder 22 ist auch aus einem Zylinderrohr 27 gebildet, dessen Innendurchmesser im gezeigten Ausführungsbeispiel etwas größer ist als der Außendurchmesser des Zylinderrohrs 25 des Kolbens 23, wodurch zwischen der Außenmantelfläche des inneren Zylinderrohrs 25 und der Innenmantelfläche des äußeren Zylinderrohrs 27 ein schmaler umlaufender Ringspalt 28 entsteht. Es ist auch denkbar, den Außendurchmesser des Zylinderrohrs 25 so zu bemessen, dass er etwa dem Innendurchmesser des Zylinderrohrs 27 entspricht, so dass kein oder kein nennenswerter Ringspalt 28 zwischen den Zylinderrohren 25 und 27 bestehen bleibt. Das Zylinderrohr 25 ist an seinem sich im Zylinder 22 befindenden Ende 29 vollständig offen. Ein gegenüberliegendes Ende des Zylinderrohrs 25, welches sich außerhalb des Zylinders 22 bzw. des Zylinderrohrs 27 befindet, ist durch einen Kolbenkopf 30 mit einem inneren Kolbenraum 44 dicht verschlossen. Dem Kolbenkopf 30 ist ein zweites Befestigungsmittel 31 zugeordnet, dass zur Anhängung des Hubzylinders 18 am ihm zugeordneten Lenkerarm 16 des Hubwerks 14 dient. Das im Durchmesser kleinere Zylinderrohr 25 des Kolbens 23 ist im Zylinderrohr 27 des Zylinders 22 durch mindestens eine Dichtung 32 abgedichtet und mindestens eine Führung 33 zum verkantungsfreien Ein- und Ausfahren geführt.

Der im Zylinderrohr 25 axialverschiebbare Innenkolben 24 weist einen zum offenen Ende 29 des Zylinderrohrs 25 weisenden Kolbenkopf 34 und eine damit verbundene Kolbenstange 35 auf. Der Kolbenkopf 34 des Innenkolbens 24 ist im Zylinderrohr 25 des Kolbens 23 durch eine Dichtung 39 abgedichtet und durch eine Führung 40 geführt. Eine freie Stirnfläche der Kolbenstange 35 des Innenkolbens 24 begrenzt eine Stirnseite des Kolbenraums 44. Die Kolbenstange 35 des Innenkolbens 24 ist im Kolbenkopf 30 des Kolbens 23 des Hubzylinders 18 verschieblich und durch Dichtungen 36 abgedichtet. Die Dichtungen 36 befinden sich in einem vorderen Endstück 37 des Kolbenkopfs 30. Dieses Endstück 37 dient auch zur Führung der Kolbenstange 35 des Innenkolbens 34. Das Endstück 37 ist fest und flüssigkeitsundurchlässig verbunden mit einem Rohransatz 38 des Kolbenkopfs 30.

Zum Ausfahren des Hubzylinders 18 ist der sich im Zylinder 22 befindenden Seite des Kolbens 23, also der Kolbenseite, Hydraulikflüssigkeit von einem Hydraulikaggregat 41 zuführbar. Dazu ist außen am Zylinder 22 in der Nähe des Befestigungsmittels 26 am Boden des Zylinders 22 eine in den Ringspalt 28 mündende Durchgangsbohrung 42 im Mantel des Zylinderrohrs 27 vorgesehen. Mit der Durchgangsbohrung 42 steht ein Hydraulikventil außen am Zylinder 22 in Verbindung. Dieses Hydraulikventil ist im gezeigten Ausführungsbeispiel als ein entsperrbares Rückschlagventil S1 mit einer Drossel R1 ausgebildet. Bei der Drossel R1 kann es sich um eine verstellbare Drossel handeln. Das Rückschlagventil S1 ist ein 2/2-Wegeventil, das elektrisch, insbesondere elektromagnetisch, betätigbar ist. Wenn das Rückschlagventil S1 aktiv ist, sperrt es den Rückfluss von Hydraulikflüssigkeit aus dem Zylinder 22. In der entsperrten Stellung ist das Rückschlagventil S1 freigegeben, wodurch Hydraulikflüssigkeit aus dem Zylinder 22 des Hubzylinders 18 zum Absenken der Ladeplattform 12 ausströmen kann.

Dem gegenüberliegenden Ende des Hubzylinders 18 ist ein Anschluss C für die Verbindungsleitung 21 zugeordnet. Durch den Anschluss C kann Hydraulikflüssigkeit aus dem Kolbenraum 44 im Kolbenkopf 30 in die Verbindungsleitung 21 fließen und umgekehrt.

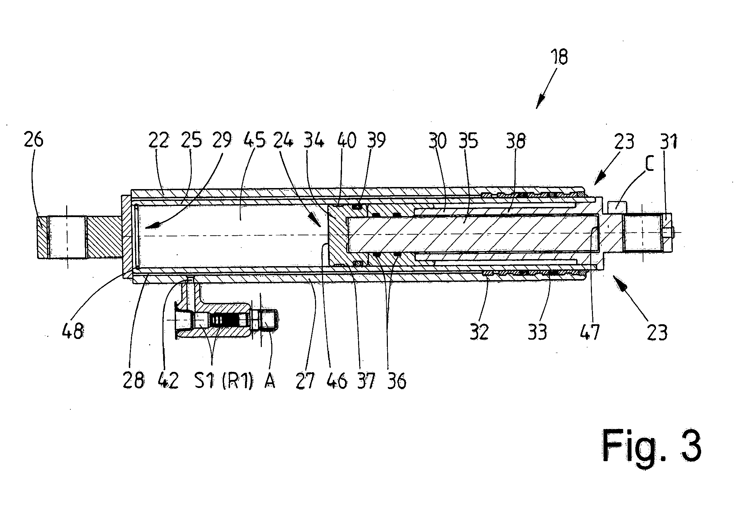

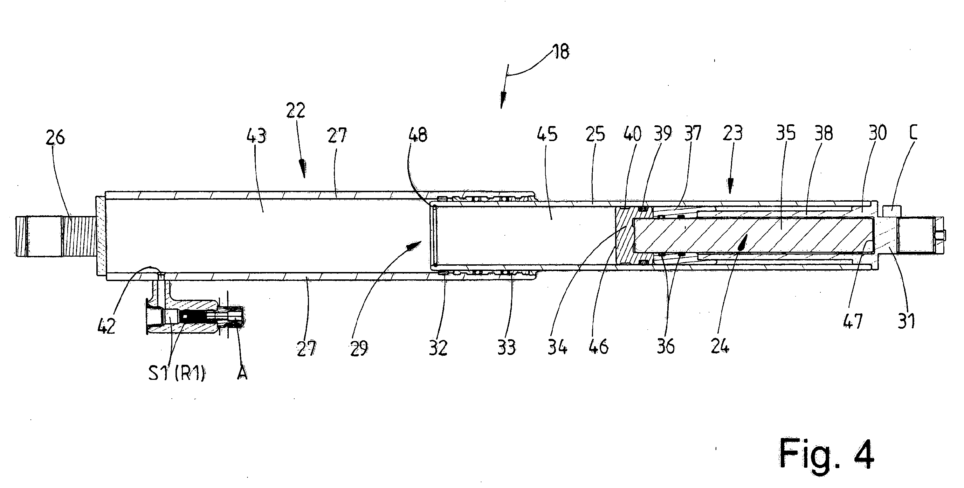

Im Inneren des Hubzylinders 18, nämlich zwischen der Kolbenseite des Kolbens 23 und des Innenkolbens 24 sowie dem mit dem Betätigungsmittel versehenen Boden, befindet sich im Zylinderrohr 27 des Zylinders 22 ein Kolbenraum 43 (Fig 4). Ein damit zusammenhängender Kolbenraum 45 befindet sich im Inneren des kleineren Zylinderrohrs 25 des Kolbens 23 (Fig. 3 und 4). Dieser Kolbenraum 45 wird freigegeben, wenn der Innenkolben 24 in den Kolben 23 einfährt bzw. eingefahren ist (Fig. 3 und 4). Bei vollständig eingefahrenem Hubzylinder 18 und vollständig ausgefahrenen Innenkolben 24 sind die Kolbenräume 43 und 45 ganz bzw. nahezu vollständig vom Kolben 23 und dem Innenkolben 24 ausgefüllt; es ist dann aber Kolbenraum 44 von der Kolbenstange 35 des Innenkolbens 24 freigegeben. Erst beim Einfahren des Innenkolbens 24 in den Kolben 23 entsteht der Kolbenraum 45. Dann wird der Kolbenraum 44 im Kolben 23 nahezu vollständig vom sich im Kolben 23 befindlichen Teil der Kolbenstange 35 des Innenkolbens 24 ausgefüllt. Beim Ausfahren des Kolbens 23 mit dem Innenkolben 24 aus dem Zylinder 22 entsteht der Kolbenraum 43 (Fig. 4). Der weitere Kolbenraum 44 im Inneren des Kolbenkopfs 30 des Kolbens 23 entspricht im Durchmesser etwa dem der Kolbenstange 35 des Innenkolbens 24 und in der Länge etwa der Länge der Kolbenstange 35 (Fig. 3 und 4).

Der Innenkolben 24 ist als Druckübersetzer ausgebildet. Zu diesem Zweck ist eine Kolbenfläche 46 des Kolbenkopfes 34 des Innenkolbens 24 größer, vorzugsweise um ein Mehrfaches größer als die Kolbenfläche 47 an der freien Stirnseite der Kolbenstange 35 des Innenkolbens 24. Die maximale Kolbenfläche des Kolbens 23 ist nach dem vollständigen Einfahren des Innenkolbens 24 in den Kolben 23 so groß wie der Außendurchmesser des Zylinderrohrs 25 des Kolbens 23. Solange der Innenkolben 24 noch nicht vollständig in den Kolben 23 eingefahren ist (Fig. 2), ist jedoch die wirksame Kolbenfläche des Kolbens 23 wesentlich geringer. Dann wird die wirksame Kolbenfläche des Kolbens 23 nur von einer Ringfläche 28 zwischen dem Außendurchmesser und dem Innendurchmesser des Zylinderrohrs 25 des Kolbens 23 gebildet. Diese Ringfläche 28 entspricht der Fläche des Außendurchmessers des Zylinderrohrs 25 abzüglich der Kolbenfläche 46 des Kolbenkopfes 34 des Innenkolbens 24. Da die Ringfläche 28 relativ schmal ist, hat sie einen Flächeninhalt, der kleiner ist als der Flächeninhalt der Kolbenfläche 46 des Kolbenkopfes 34 des Innenkolbens 24. Im gezeigten Ausführungsbeispiel ist die Ringfläche 48 etwa nur halb so groß wie die Kolbenfläche 46 des Kolbenkopfes 34 des Innenkolben 24.

Aufgrund der vorstehend beschriebenen Ausbildung des Hubzylinders 18, insbesondere die Integration des als Druckübersetzer ausgebildeten Innenkolbens 24 in den Kolben 23 des Hubzylinders 18, wird ausgehend von der eingefahrenen Stellung des Hubzylinders 18 (Fig. 2) beim Ausfahren desselben zunächst der Innenkolben 24 in den Kolben 23 eingefahren, aber noch nicht der Kolben 23 aus dem Zylinder 22 herausgefahren. Beim Einfahren des Innenkolbens 24 in den Kolben 23 wird in demselben, und zwar dem Kolbenraum 44, Hydraulikflüssigkeit verdrängt. Diese ist über den Anschluss C abführbar. Sobald der Innenkolben 24 vollständig in den Kolben 23 eingefahren ist (Fig. 3 und 4) wirken die Kolbenfläche 46 des Innenkolbens 24 und die Ringfläche 48 des Zylinderrohrs 25 gemeinsam als kreisförmige Kolbenfläche des Kolbens 23, wodurch dieser aus dem Zylinder 22 ausgefahren wird zum Anheben der Ladeplattform 12.

Die beim Einfahren des Innenkolbens 24 in den Kolben 23 von der Kolbenstange 35 im Kolbenraum 44 verdrängte Hydraulikflüssigkeit gelangt über den Anschluss C in die Verbindungsleitung 21 und durch diese zum Anschluss C des Kippzylinders 17. Zu diesem Zweck sind die Anschlüsse C des Kippzylinders 17 des Hubzylinders 18 durch die Verbindungsleitung 21 hydraulisch verbunden. Die Hydraulikflüssigkeit aus dem Kolbenraum 44 des Hubzylinders 18 gelangt auf eine Kolbenseite 49 des Kippzylinders 17, wodurch dieser anfänglich ausgefahren wird zur Rückgängigmachung der Bodenangleichung der Ladeplattform 12. Dabei hebt sich die Spitze 19 der Ladeplattform 12 vom Boden 20 ab, und zwar vorzugsweise so weit, dass die Nutzfläche 13 der Ladeplattform 12 wieder horizontal oder mindestens annähernd horizontal verläuft, indem die Spitze 19 etwas über die Horizontale nach oben hinausragt. Zu diesem Zweck sind der Kolbenraum 44 und/oder der Durchmesser der Kolbenstange 35 des Innenkolben 24 sowie der Hubweg, mit dem der Innenkolben 24 in den Kolben 23 einfahrbar ist, so bemessen, dass das aus dem Kolbenraum 44 beim vollständigen Einfahren des Innenkolbens 24 in den Kolben 23 verdrängte Hydrauliköl ausreicht, um den Kippzylinder 17 soweit auszufahren, dass die Bodenangleichung der Ladeplattform 12 rückgängig gemacht worden ist.

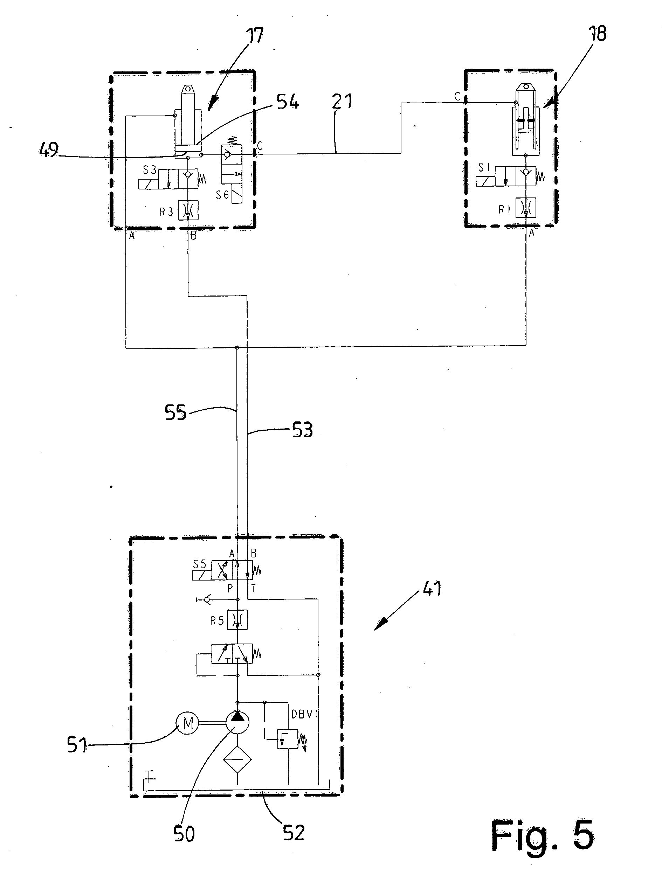

Die Fig. 5 zeigt ein Hydraulikschaltbild mit dem Kippzylinder 17, dem Hubzylinder 18 und dem Hydraulikaggregat 41.

Das Hydraulikaggregat 41 weist eine Hydraulikpumpe 50, einen Motor, insbesondere einen Elektromotor 51, einen Tank 52 für Hydraulikflüssigkeit, eine gegebenenfalls verstellbare Drossel R5 und ein elektrisch betätigbares bzw. steuerbares 4/2-Wegeventil S5 auf. Auf weitere in der Fig. 5 gezeigte Komponenten des Hydraulikaggregats 41 wird hier nicht näher eingegangen.

Dem Kippzylinder 17 sind auf der Kolbenseite 49 ein entsperrbares Rückschlagventil S3 und ein entsperrbares Rückschlagventil S6 zugeordnet. Beide sind elektrisch ansteuerbar. Dem Rückschlagventil S3 ist in Richtung zum Hydraulikaggregat 41 eine gegebenenfalls verstellbare Drossel R3 vorgeordnet. Dem Rückschlagventil S3 und der Drossel R3 ist der Anschluss B zugeordnet, der über eine Hydraulikleitung 53 zum Anschluss B des 4/2-Wegeventils S5 führt.

Eine Kolbenstangenseite 54 des Kippzylinders 17 ist über einen Anschluss A mit dem gleichermaßen bezeichneten Anschluss A des 4/2-Wegeventils S5 verbunden. Dieser Anschluss A führt auch zum Anschluss A des Hubzylinders 18, und zwar zur Drossel R1 sowie das entsperrbare Rückschlagventil S1 des Hubzylinders 18. Dementsprechend sind die Anschlüsse A des Hydraulikaggregats 41, des Hubzylinders 18 und des Kippzylinders 17 durch eine sich verzweigende Hydraulikleitung 55 verbunden.

Schließlich sind die Anschlüsse C des Hubzylinders 18 und des 2/2-Rückschlagventils S6 des Kippzylinders 17 durch die Verbindungsleitung 21 verbunden.

In der in Fig. 5 gezeigten Stellung der Ventile wird die Ladeplattform 12 vom mindestens einen Hubzylinder 18 angehoben, während der mindestens eine Kippzylinder 17 unbetätigt bleibt. Dazu wird bei in den Kolben 23 eingefahrenem Innenkolben (Fig. 3) der Kolben 23 aus dem Zylinder 22 ausgefahren (Fig. 4). Dabei fließt Hydrauliköl durch die verzweigte Hydraulikleitung 55 zum Kippzylinder 17 und zum Hubzylinder 18. Infolge der entsprechenden Anordnung der der Kolbenseite des Kippzylinder 17 zugeordneten Rückschlagventile S3 und S6 kann der Kippzylinder 13 nicht eingefahren werden, weil über die Hydraulikleitung 55 infolge der verschlossenen Rückschlagventile S3 und S6 kein Hydrauliköl auf die Kolbenseite 49 des Kippzylinders 17 abfließen kann. Der Kippzylinder 17 kann wegen des Hydraulikdrucks auf der Kolbenstangenseite 54 auch nicht ausfahren. Somit ist in den gezeigten Stellungen der Ventile der mindestens eine Kippzylinder 17 hydraulisch eingespannt.

Zum Absenken der Ladeplattform 12 werden die Ventile S1 und S5 in eine zur Darstellung der in der Fig. 5 entgegengesetzten Schaltstellung gebracht. Es kann dann Hydrauliköl aus dem Hubzylinder 18 abfließen infolge des freigeschalteten Rückschlagventils S1. Weil beim Absenken der Ladeplattform 12 das Einfahren des mindestens einen Hubzylinders 18 durch das Eigengewicht der Ladeplattform 12 und gegebenenfalls einer darauf befindlichen Last erfolgt, kann zum Absenken der Ladeplattform 12 die Hydraulikpumpe 50 unbetätigt sein. Hydrauliköl aus dem Hubzylinder 18 fließt dann über die Hydraulikleitung 55 über das 4/2-Wegeventil S5 zurück in den Tank 52. Der Kippzylinder 17, dessen Kolbenstangenseite 14 beim Senken der Ladeplattform 12 auch mit der drucklosen Hydraulikleitung 55 verbunden ist, kann nicht einfahren zum Herunterschwenken der Ladeplattform 12, weil sich die Rückschlagventile S3 und S6 in der den Rückfluss von Hydrauliköl von der Kolbenseite 49 sperrenden Stellungen befinden.

Nachdem die Ladeplattform 12 auf den Boden 12 abgesenkt ist, erfolgt die Bodenangleichung durch ein Öffnen bzw. Freischalten des Rückschlagventils S6. Dann kann von der Kolbenseite 49 des Kippzylinders 17 Hydraulikflüssigkeit abfließen über die Verbindungsleitung 21 in den Kolbenraum 44 im Kolben 23. Dabei wird der Kippzylinder 17 zum Absenken der Spitze 19 der Ladeplattform 12 auf den Boden 20 eingefahren und es kommt zur Bodenangleichung der Ladeplattform 20. Das an der Kolbenseite 49 des Kippzylinders 17 bei der Bodenangleichung verdrängte Hydrauliköl fährt hierbei den Innenkolben 24 aus dem Kolben 23 vollständig heraus, wobei aber der durch das Absenken der Ladeplattform 12 auf den Boden 20 eingefahrene Kolben 23 des Hubzylinders 18 bei abgesenkter Ladeplattform 12 eingefahren bleibt.

Nach dem Steuerbefehl zum Anheben der Ladeplattform 12 befinden sich wieder alle Ventile in der in der Fig. 5 gezeigten Stellung. Über die Hydraulikleitung 55 fließt dann Öl zur Kolbenseite des Hubzylinders 18 und zur Kolbenstangenseite 54 des Kippzylinders 17. Es wird dann zunächst der Innenkolben 24 in den Kolben 23 des Hubzylinders 18 eingefahren und die dabei im Kolbenraum 44 vorhandene Hydraulikflüssigkeit über die Verbindungsleitung 21 zur Kolbenseite 49 des Kippzylinders 17 umgeleitet, wodurch der Kippzylinder 17 gezielt ausfährt, und zwar nur so weit, bis die Bodenangleichung rückgängig gemacht ist. Dabei wird der Kippzylinder 17 nur so weit ausgefahren, wie es aufgrund des Volumens des im Kolbenraum 44 des Kolbens 23 beim vollständigen Einfahren des Innenkolbens 24 verdrängten Hydrauliköls möglich ist. Durch eine entsprechende Bemessung des Volumens des Kolbenraums 44 im Hubzylinder 18 und des Volumens des Kolbenraums der Kolbenseite 49 des Kippzylinders 17 fließt nur so viel Hydraulikflüssigkeit über die Verbindungsleitung 21 vom Hubzylinder 18 in den Raum auf der Kolbenseite 49 des Kippzylinders 17, wie erforderlich ist, um die Bodenangleichung rückgängig zu machen.

Weil der Innenkolben 24 als Druckübersetzer ausgebildet ist, ist der Druck der Hydraulikflüssigkeit in der Verbindungsleitung 21 und somit auch an der Kolbenseite 49 des Kippzylinders 17 größer oder zumindest genauso groß wie der Druck des Hydrauliköls in der Hydraulikleitung 55, die zur Kolbenstangenseite 54 des Kippzylinders 17 führt. Dabei kann die Bodenangleichung zuverlässig rückgängig gemacht werden, weil infolge des größeren Drucks in der Verbindungsleitung 21 und/oder wegen der kleinen wirksamen Kolbenfläche auf der Kolbenstangenseite 54 des Kippzylinders 17 vorrangig die Bodenangleichung automatisch rückgängig gemacht wird und erst danach der mindestens eine Hubzylinder 18 die Ladeplattform 12 anhebt bzw. anheben kann. Das geschieht gleichermaßen bei beladener und auch unbeladener Ladeplattform 12.

Nachdem die Bodenangleichung rückgängig gemacht ist, steht die volle Kolbenfläche 46 des Kolbens 23 zum Anheben der Ladeplattform 12 zur Verfügung, weil nach Beendigung der Bodenangleichung der Innenkolben 24 vollständig in den Kolben 23 eingefahren ist und somit relativ zum Kolben 23 feststeht. Dadurch kommt es nach der automatischen hydraulischen Rückgängigmachung der Bodenangleichung ohne einen neuerlichen Bedienbefehl zum Anheben der Ladeplattform 12 mit einer gegebenenfalls sich darauf befindlichen Last.

Infolge der Anordnung des Innenkolbens 24 zur Rückgängigmachung der Bodenangleichung im Hubzylinder 18 und die Ausbildung des Innenkolbens 24 als Druckübersetzer wird erreicht, dass unter allen Umständen zuverlässig und automatisch die Bodenangleichung rückgängig gemacht wird. Das gilt insbesondere für den ungünstigen Beladezustand einer schweren Last in der Nähe der Spitze 19 der Ladeplattform 12. Dann ist die Kraft zum Rückgängigmachen der Bodenangleichung, nämlich zum Hochschwenken der Spitze 19 der Ladeplattform 12, sehr groß. Es könnte dann die Gefahr bestehen, dass nicht zuerst die Bodenangleichung automatisch rückgängig gemacht wird, sondern sofort der Hubzylinder 18 die Ladeplattform 12 anhebt. Wegen der Integration des Innenkolbens 24 in den Kolben 23 ist das aber nicht möglich, weil zum Anheben der Ladeplattform 12 anfänglich, nämlich wenn vor der automatischen Rückgängigmachung der Bodenangleichung der Innenkolben 24 noch nicht vollständig in den Kolben 23 eingefahren ist (Fig. 2), nur die kleinere Ringfläche 28 zum für das Anheben der Ladeplattform 12 erforderliche Ausfahren des Kolbens 23 zur Verfügung steht. Da diese wesentlich kleiner ist als die zum Einfahren des Innenkolbens 24 wirksame Kolbenfläche 46 desselben, ist insbesondere bei als Druckübersetzer ausgebildetem Innenkolben 24 unter allen Umständen sichergestellt, dass stets zuerst die Bodenangleichung automatisch rückgängig gemacht wird, bevor der Hubzylinder 18 die Ladeplattform 12 anhebt.

### Bezugszeichenliste:

| | | | |
|---|---|---|---|
| 10 | Fahrzeug | 40 | Führung |
| 11 | Hubladebühne | 41 | Hydraulikaggregat |
| 12 | Ladeplattform | 42 | Durchgangsbohrung |
| 13 | Nutzfläche | 43 | Kolbenraum |
| 14 | Hubwerk | 44 | Kolbenraum |
| 15 | Traverse | 45 | Kolbenraum |
| 16 | Lenkerarm | 46 | Kolbenfläche |
| 17 | Kippzylinder | 47 | Kolbenfläche |
| 18 | Hubzylinder | 48 | Ringfläche |
| 19 | Spitze | 49 | Kolbenseite |
| 20 | Boden | 50 | Hydraulikpumpe |
| 21 | Verbindungsleitung | 51 | Elektromotor |
| 22 | Zylinder | 52 | Tank |
| 23 | Kolben | 53 | Hydraulikleitung |
| 24 | Innenkolben | 54 | Kolbenstangenseite |
| 25 | Zylinderrohr | 55 | Hydraulikleitung |
| 26 | Befestigungsmittel | | |
| 27 | Zylinderrohr | | |
| 28 | Ringspalt | A | Anschluss |
| 29 | Ende | B | Anschluss |
| 30 | Kolbenkopf | C | Anschluss |
| 31 | Befestigungsmittel | | |
| 32 | Dichtung | S1 | entsperrbares Rückschlagventil |
| 33 | Führung | S3 | entsperrbares Rückschlagventil |
| 34 | Kolbenkopf | S5 | 4/2-Wegeventil |
| 35 | Kolbenstange | S6 | entsperrbares Rückschlagventil |
| 36 | Dichtung | | |
| 37 | Endstück | R1 | Drosselventil |
| 38 | Rohransatz | R3 | Drosselventil |
| 39 | Dichtung | | |

## Patentansprüche

1. Hubladebühne zum Anbau an ein Fahrzeug (10) mit einer Ladeplattform (12) und einem Hubwerk (14) zum Heben, Senken und/oder Verschwenken der Ladeplattform (12), wobei das Hubwerk (14) mindestens einen Hubzylinder (18) zum Heben und Senken der Ladeplattform (12) auf wenigstens einen Kippzylinder (17) zum Verschwenken der Ladeplattform (12) aufweist, **dadurch gekennzeichnet, dass** in einem Kolben (23) mindestens eines Hubzylinders (18) ein kleinerer Innenkolben (24) angeordnet ist.

2. Hubladebühne nach Anspruch 1, **dadurch gekennzeichnet, dass** der mindestens eine Hubzylinder (18) einfach wirkend ist und/oder der Innenkolben (24) einen im Hubzylinder (18) liegenden Ende (29) des Kolbens (23) des Hubzylinders (18) zugeordnet ist.

3. Hubladebühne nach Anspruch 1 oder 2, **dadurch gekennzeichnet, dass** der Innenkolben (24) relativ zum Kolben (23) verschieblich ist, vorzugsweise der Innenkolben (24) in den Kolben (23) teleskopartig ein- und aus demselben ausfahrbar ist.

4. Hubladebühne nach einem der vorhergehenden Ansprüche, **dadurch gekennzeichnet, dass** der Innenkolben (24) als Druckübersetzer augebildet ist.

5. Hubladebühne nach einem der vorhergehenden Ansprüche, **dadurch gekennzeichnet, dass** der Kolben (23) eine von seinem Ende (29) im Inneren des Hubzylinders (18) ausgehende Zylinderbohrung zur zumindest teilweisen Aufnahme des Innenkolbens (24), vorzugsweise einer kleineren Kolbenstange (35) des Innenkolbens (24), aufweist.

6. Hubladebühne nach einem der vorhergehenden Ansprüche, **dadurch gekennzeichnet, dass** bei ausgefahrenem Innenkolben (24) eine wirksame Kolbenfläche (46) des Innenkolbens (24) größer ist als eine wirksame Kolbenfläche des Kolbens (23).

7. Hubladebühne nach einem der vorhergehenden Ansprüche, **dadurch gekennzeichnet, dass** während der Bewegbarkeit des Innenkolbens (24) im Kolben (23) des Hubzylinders (18) die wirksame Kolbenfläche des Kolbens (23) eine Ringfläche (48) zwischen dem größten Außendurchmesser des Kolbens (23) und der Kolbenfläche (46) des Innenkolbens (24) ist, wobei vorzugsweise die Kolbenfläche des Kolbens (23) bei vollständig eingefahrenem Innenkolben (24) sich aus der Kolbenfläche (46) des Innenkolbens (24) und der Ringfläche (48) des Kolbens (23) zusammensetzt.

8. Hubladebühne nach einem der vorhergehenden Ansprüche, **dadurch gekennzeichnet, dass** ein durch die Zylinderbohrung im Kolben (23) des Hubzylinders (28) gebildeter Kolbenraum (44) im Kolben (23) hydraulisch mit mindestens einem Kippzylinder (17) verbunden ist.

9. Hubladebühne nach einem der vorhergehenden Ansprüche, **dadurch gekennzeichnet, dass** die Zylinderbohrung bzw. der Kolbenraum (44) im Kolben (23) hydraulisch mit einer Kolbenseite (29) des Kippzylinders (17) verbunden ist.

10. Hubladebühne nach einem der vorhergehenden Ansprüche, **dadurch gekennzeichnet, dass** der hydraulische Verbindungsleitung (21) zwischen der Zylinderbohrung bzw. dem Kolbenraum (44) des Kolbens (23) des Hubzylinders (18) und der Kolbenseite (49) des Kippzylinders (17) ein schaltbares, vorzugsweise ein entsperrbares, Rückschlagventil (S6) zugeordnet ist.

11. Hubladebühne nach einem der vorhergehenden Ansprüche, **dadurch gekennzeichnet, dass** das vorzugsweise entsperrbare Rückschlagventil (S6) nach Rückgängigmachung der Bodenangleichung zum Ausfahren des Innenkolbens (24) aus dem Kolben (23) des Hubzylinders (18) freigebbar ist, vorzugsweise durch eine elektrische Ansteuerung.
